Europäisches Patentamt

European Patent Office

Office européen des brevets

(19)

(11) Veröffentlichungsnummer : **0 496 801 B1**

(12) # EUROPÄISCHE PATENTSCHRIFT

(45) Veröffentlichungstag der Patentschrift :
28.12.94 Patentblatt 94/52

(51) Int. Cl.⁵ : **H04N 9/77**, H04N 9/64

(21) Anmeldenummer : 90915981.6

(22) Anmeldetag : 19.10.90

(86) Internationale Anmeldenummer :
PCT/EP90/01776

(87) Internationale Veröffentlichungsnummer :
WO 91/07060 16.05.91 Gazette 91/11

(54) **VERFAHREN ZUR ERZEUGUNG EINER VERZÖGERUNG SOWIE EINE SCHALTUNG ZUR DURCHFÜHRUNG DES VERFAHRENS.**

(30) Priorität : 28.10.89 DE 3935980

(43) Veröffentlichungstag der Anmeldung :
05.08.92 Patentblatt 92/32

(45) Bekanntmachung des Hinweises auf die
Patenterteilung :
28.12.94 Patentblatt 94/52

(84) Benannte Vertragsstaaten :
AT BE CH DE DK FR GB IT LI NL SE

(56) Entgegenhaltungen :
EP-A- 0 293 217
EP-A- 0 309 875
US-A- 4 335 395
US-A- 4 602 275
US-A- 4 745 462
US-A- 4 772 938

(73) Patentinhaber : **DEUTSCHE THOMSON-BRANDT GMBH
Hermann-Schwer-Strasse 3
D-78048 Villingen-Schwenningen (DE)**

(72) Erfinder : **GUILLON, Jean-Claude
10, rue de Provence-Gerstheim
F-67150 Erstein (FR)**
Erfinder : **RUFRAY, Jean-Claude
37, boulevard Dezerseul
F-35000 Cesson-Sevigne (FR)**

(74) Vertreter : **Einsel, Robert, Dipl.-Ing.
Deutsche Thomson-Brandt GmbH
Patent- und Lizenzabteilung
Göttinger Chaussee 76
D-30453 Hannover (DE)**

EP 0 496 801 B1

## Beschreibung

Die Erfindung betrifft ein Verfahren zur Erzeugung einer Verzögerung gemäß dem Oberbegriff des Patentanspruchs 1 sowie eine Schaltung zur Durchführung des Verfahrens gemäß dem Oberbegriff des Patentanspruchs 6.

Ein Filter verursacht einen bestimmten Verzögerungsbetrag bei der Signalverarbeitung. Wenn ein solches Filter nur mit einer Komponente eines Fernsehsignals beaufschlagt wird, z.B. Luminanz oder Chrominanz, muß die andere Signalkomponente verzögert werden, um die relative Phase zwischen beiden Komponenten konstant zu halten. Ein Beispiel einer solcher Phasenkompensation ist z.B. aus der Luminanzverzögerungsleitung eines TV-Gerätes bekannt, welche die Verzögerung kompensiert, die durch eine Chrominanzdecodierung mittels eines Chrominanzdecoders zustande kommt.

Bei Verwendung z. B. eines vertikalen Filters beträgt die benötigte Verzögerung eine oder mehr Zeilen. Die Komponenten zur Zeilenverzögerung erhöhen den Schaltungsaufwand sowie die Kosten eines Gerätes.

Der Erfindung liegt die Aufgabe zugrunde, ein Verfahren sowie eine Schaltung anzugeben, bei der eine Verzögerung erzielt wird.

Diese Aufgabe wird bei dem erfindungsgemäßen Verfahren nach dem Oberbegriff des Patentanspruchs 1 durch die im Kennzeichen des Patentanspruchs 1 angegebenen Merkmale gelöst. Die erfindungsgemäße Schaltung ist im Patentanspruch 6 wiedergegeben. Weiterbildungen und vorteilhafte Ausgestaltungen der Erfindung ergeben sich aus dem Unteransprüchen, der weiteren Beschreibung und der Zeichnung.

Erfindungsgemäß wird ein Videospeicher, wie er in DE-A- 37 33 012 beschrieben ist, mit einer Zeilen- und Spaltenspeicherstruktur sowie Adresszählern für Zeilen und/oder Spalten zum Schreiben und/oder Lesen des Speichers derart eingesetzt, daß für das Lesen der ersten Signalkomponente der Inhalt einer ersten Zeile mit einem ersten Wert und für das Lesen der zweiten Signalkomponente der Inhalt einer zweiten Zeile verwendet wird, die einen gegenüber dem ersten Wert erhöhten zweiten Wert aufweist. Ein solches Verzögerungsverfahren kann mit einem Filter vorzugsweise in der Weise kombiniert werden, daß zur Kompensation der Verzögerung des zu filternden Signals dieses gegenüber dem nicht zu filternden Signal um die Verzögerung vorzeitig aus dem Speicher ausgelesen wird.

Nachfolgend wird die Erfindung anhand der Zeichnung näher erläutert. Darin zeigen:

Fig. 1     einen Zeilenadresszähler
Fig. 2     ein Zeitdiagramm
Fig. 3     eine Bildspeicherorganisation
Fig. 4     ein Blockdiagramm eines vertikalen Filters.

Es ist seit Jahren bekannt, daß die Reproduktion natürlicher Bilder nicht die gleiche Auflösung für Luminanz und Chrominanz benötigt. Die erste Beschreibung dieses Prinzips war die Definition des SECAM Standards für die Übertragung von farbigen Bildern.

Dasselbe Prinzip wird in einem digitalen Fernsehkonzept mit zusätzlichen Darstellungsmöglichkeiten verwendet, um den Speicherbedarf eines Bildspeichers zu reduzieren. Alternierend wird nur eine Farbkomponente V oder U einer Zeile in jeder Zeile gespeichert.

Nichts desto weniger benötigt die Reproduktion eines Bildes auf einem Wiedergabeschirm simultan die Komponenten U, V und Y in jeder Zeile. Dies kann durch Wiederholung der Farbkomponente der vorhergehenden Zeile erreicht werden, so wie es bei SECAM heutzutage geschieht. Bei dieser Art der Wiedergabe können die Konturen einzelner Objekte Störungen aufweisen.

Eine bessere Reproduktion kann durch eine Interpolation der ausgelassenen Zeile von zwei benachbarten Zeilen mit einem vertikalen Interpolationsfilter erzielt werden. Ein solcher Filter kann z.B. durch eine Gleichung beschrieben werden:

$$Vo/VI = 0,25 + 0,5z^{-1} + 0,25z^{-2}$$

wobei

$$z = e^{PT} \text{ ist und } T = 1H$$

Dieses Filter verursacht eine Verzögerung des Chrominanzsignals von 1H.

Bei der Verwendung eines solchen vertikalen Interpolationsfilters ist es notwendig, eine zusätzliche verzögerte Zeile für das Luminanzsignal zu verwenden, um die Verzögerung, die das Chrominanzfilter hervorgerufen hat, zu kompensieren.

Erfindungsgemäß wird eine Verzögerungsleitung für die Luminanz dadurch vermieden, daß ein Videospeicher, wie er in DE-A- 37 33 012 beschrieben ist, mit einem vertikalen Interpolationsfilter kombiniert wird.

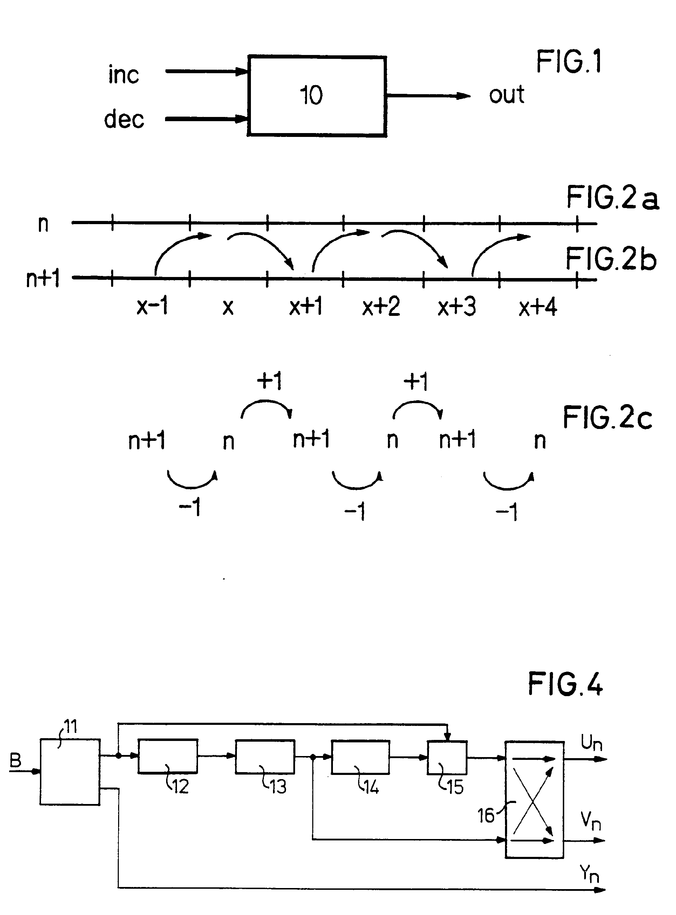

Zusätzlich zu den in DE-A- 37 33 012 beschriebenen Spalten- und Zeilenzählern wird dem Speicher ein zusätzlicher Zeilenadresszähler 10 gemäß Fig. 1 zugeordnet, dessen Zählerstände zur Kompensation der Verzögerung durch ein nachgeschaltetes Vertikalfilter, wie es in Fig. 4 beschrieben wird, auf einer Blockbasis von 12 Abtastwerten erhöht oder erniedrigt werden können.

Dieser Zeilenadresszähler 10 wird erfindungsgemäß dazu verwendet, Blöcke zweier benachbarter Zeilen zu lesen in der Weise, wie sie in Fig. 2a bis Fig. 2c gezeigt sind.

Anstelle eines Zeilenadresszählers 10 können in einer weiteren Ausgestaltung der Erfindung zwei umschaltbare Zähler verwendet werden, mit unterschiedlichen Zählerständen.

Fig. 2a zeigt eine Zeile n, in der ein Bildsignal zeilenweise gespeichert ist, unterteilt in Blockabschnitten. Fig. 2b zeigt eine benachbarte Zeile n+1 mit gleichem Speicheraufbau. Die Blöcke der Zeilen n, n+1 sind durch den Zeilenadresszähler 10 lesbar. Der Zeilenadresszähler 10 ordnet den Blöcken der Zeilen n, n+1 die fortlaufenden, ansteigenden Adressen x-1, x, x+1, ..., x+m zu.

Fig. 2c zeigt das Ausgangssignal des Zeilenadresszählers 10. Für den Block x-1 wird der Block der Zeile n+1 verwendet. Anschließend wird das Ausgangssignal des Zeilenadresszählers 10 erniedrigt. Für den Block x wird somit der Block der Zeile n verwendet. Durch abwechselnde Erhöhung und Erniedrigung des Ausgangssignals des Zeilenadresszählers 10 werden die fortlaufenden Blöcke benachbarter Zeilen n, n+1 aus dem Videospeicher ausgelesen, wobei die Blöcke der Zeilen n+1 dem vertikalen Interpolationsfilter gemäß Fig. 4 zugeführt werden, die Blöcke der Zeilen n hingegen direkt nachfolgenden Verarbeitungsschaltungen.

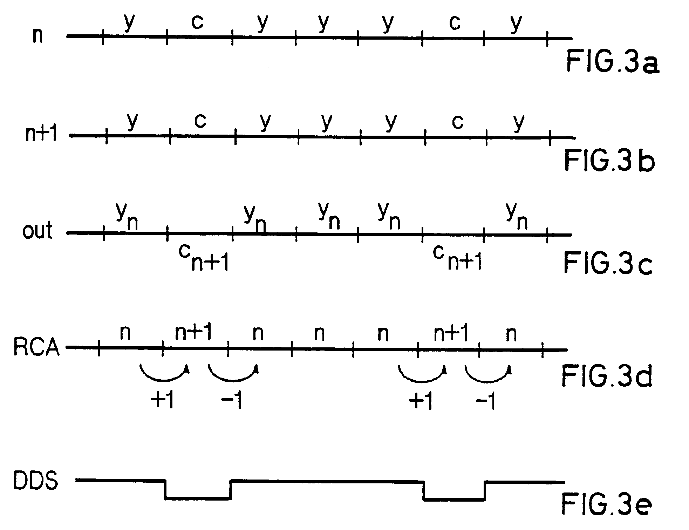

Fig. 3a und Fig. 3b zeigen die Organisation des Bildspeichers für die Zeilen n, n+1. Die Zeilen sind in Blöcke aufgeteilt mit z. B. 12 Abtastwerten pro Block. Je drei Blöcke des Luminanzsignals Y alternieren mit einem Block des Chrominanzsignals C.

Fig. 3c zeigt das Ausgangssignal, wie es aus dem Bildspeicher ausgelesen wird. Die Blöcke des Luminanzsignals Y entstammen der Zeile n, die Blöcke des Chrominanzsignals C hingegen der Zeile n+1.

Fig. 3d zeigt das Ausgangssignal des Zeilenadresszählers 10 bezogen auf den Speicherinhalt einer Zeile des Videospeichers. Abhängig vom Inhalt der Zeile wird der Zeilenadresszähler 10 beim Wechsel von Luminanz- auf Chrominanzsignalinhalt erhöht, im anderen Fall erniedrigt.

Fig. 3e zeigt ein Steuersignal DDD eines Demultiplexers 11 gemäß Fig. 4.

Fig. 4 zeigt ein Blockdiagramm eines vertikalen Interpolationsfilters. Dieser Demultiplexer 11 führt das Luminanzsignal $Y_n$ des Speichers an dem vertikalen Interpolationsfilter gemäß Fig. 4 vorbei direkt den nachfolgenden Verarbeitungsschaltungen zu. Das Chrominanzsignal $C_{n+1}$ der Zeile n+1 wird gemäß Fig. 4 sowohl einem ersten Verzögerungsglied 12 als auch einer Additionsschaltung 15 zugeführt. Das Ausgangssignal des ersten Verzögerungsgliedes 12 wird einem zweiten Verzögerungsglied 14 und einer Interpolationsschaltung 16 zugeführt. Das Ausgangssignal des zweiten Verzögerungsgliedes 14 wird der Additionsschaltung 15 zugeführt, dessen Ausgangssignal ebenfalls der Interpolationsschaltung 16 zugeführt wird. Die Interpolationsschaltung 16 hat zwei Ausgänge $U_u$, $V_n$, an denen die Chrominanzsignale wie folgt den nachfolgenden Verarbeitungsschaltungen zugeführt werden:

Zeile n:        $V_n = [V_{(n+1)} + V_{n-1}]/2$

Zeile n+1:      $U_n = [U_n + U_{(n+2)}]/2$.

## Patentansprüche

1.     Verfahren zur zeitlichen Anpassung einer zweiten Signalkomponente (C) an eine erste Signalkomponente (Y), die beide in einem Speicher mit Adresszählern für Zeilen und/oder Spalten zum Schreiben und/oder Lesen des Speicherinhaltes unter Verwendung einer Zeilen- und Spaltenstruktur gespeichert sind, **dadurch gekennzeichnet**, daß mit Hilfe eines zusätzlichen, inkrementierbaren und dekrementierbaren Zählers jeweils für das Lesen der ersten Signalkomponente (Y) gespeicherte Werte einer ersten Zeile mit einem ersten Adresswert (n) und für das Lesen der zweiten Signalkomponente (C) gespeicherte Werte einer zweiten Zeile mit einem zweiten Adresswert (n+1) verwendet werden, wobei der zweite Adresswert gegenüber dem ersten erhöht ist und die ausgelesenen Werte der zweiten Signalkomponente (C) einer Signalverarbeitungsschaltung zugeführt werden, die jeweils aus mehreren Zeilen ausgelesene Werte der zweiten Signalkomponente kombiniert verarbeitet.

2.     Verfahren nach Anspruch 1, **dadurch gekennzeichnet**, daß die Adressierung für das Lesen des Speichers mittels zweier umschaltbarer Zähler durchgeführt wird.

3.     Verfahren nach Anspruch 1, **dadurch gekennzeichnet**, daß die Adressierung für das Lesen des Speichers mittels eines Zählers (10) durchgeführt wird, dessen Zählerstand erhöht und erniedrigt werden kann.

4.     Verfahren nach Anspruch 2 oder 3, **dadurch gekennzeichnet**, daß die Signalverarbeitungsschaltung ein vertikales Interpolationsfilter ist, wobei die Verzögerung dieses Interpolationsfilters der Differenz des zweiten Adresswertes (n+1) zum ersten Adresswert (n) entspricht.

5. Verfahren nach einem oder mehreren der Ansprüche 1 bis 4, **dadurch gekennzeichnet**, daß die erste Signalkomponente (Y) der Luminanzsignalanteil und die zweite Signalkomponente (C) der Chrominanzsignalanteil eines TV-Signals ist.

6. Schaltung zur Durchführung eines Verfahrens nach einem oder mehreren der Ansprüche 1 bis 5 bestehend aus einem Speicher zur Speicherung einer ersten Signalkomponente (Y) und einer zweiten Signalkomponente (C) unter Verwendung einer Zeilen- und Spaltenstruktur und einem Adresszähler für Zeilen und/oder Spalten zum Schreiben und/oder Lesen des Speicherinhalts, **dadurch gekennzeichnet**, daß die gespeicherten Werte der Signalkomponenten mittels mindestens eines zusätzlichen, inkrementierbaren und dekrementierbaren Zählers (10) ausgelesen werden, daß die zweite Signalkomponente (C) mittels eines Demultiplexers (11) einer ersten Verzögerungsschaltung (12) und einer Additionsschaltung (15) zugeführt wird, daß das Ausgangssignal der ersten Verzögerungsschaltung (12) einer Interpolationsschaltung (16) und über eine zweite Verzögerungsschaltung (14) der Additionsschaltung (15) zugeführt wird, daß das Ausgangssignal der Additionsschaltung (15) der Interpolationsschaltung (16) zugeleitet wird und daß an Ausgängen der Interpolationsschaltung (16) die nach Farbkomponenten ($U_n$, $V_n$) aufgespaltete zweite Signalkomponente (C) abgreifbar ist.

7. Schaltung nach Anspruch 6, **dadurch gekennzeichnet**, daß die Interpolationsschaltung (16) Ausgangssignale entsprechend folgender Gleichungen liefert:
für die Zeile n: $V_n = [V_{(n+1)} + V_{(n-1)}]/2$
für die Zeile n+1: $U_n = [U_n + V_{(n+2)}]/2$

## Claims

1. A method for the matching in time of a second signal component (C) to a first signal component (Y) which are both stored in a memory with address counters for lines and/or columns for the writing and/or reading of the memory content using a line and column structure, **characterised in that** with the aid of an auxiliary counter, which can be in incremented and decremented, there are used in each case for the reading of the first signal component (Y) stored values of a first line with a first address value (n) and for the reading of the second signal component (C) stored values of a second line with a second address value (n+1), the second address value being raised relative to the first and the read out values of the second signal component (C) being fed to a signal processing circuit, which in each case processes read out values of the second signal component combined from a plurality of lines.

2. A method according to claim 1, **characterised in that** the addressing for the reading of the memory is executed by means of two reversible counters.

3. A method according to claim 1, **characterised in that** the addressing for the reading of the memory is undertaken by means of a counter (10), the counting state of which can be raised and lowered.

4. A method according to claim 2 or 3, **characterised in that** the signal processing circuits is a vertical interpolation filter, the delay of this interpolation filter corresponding to the difference of the second address value (n+1) from the first address value (n).

5. A method according to one or more of claims 1 to 4, **characterised in that** the first signal component (Y) is the luminance signal component and the second signal component (C) is the chrominance signal component of a TV signal.

6. A circuit for performing a method according to one or more of claims 1 to 5, consisting of a memory for storing a first signal component (Y) and a second signal component (C) using a line and column structure and an address counter for lines and/or columns for the writing and/or reading of the memory content, **characterised in that** the stored values of the signal components are read out by means of at least one auxiliary counter (10), which can be incremented and decremented, in that the second signal component (C) is fed by means of a demultiplexer (11) to a first delay circuit (12) and an adding circuit (15), in that the output signal of the first delay circuit (12) is supplied to an interpolation circuit (16) and via a second delay circuit (14) to the adding circuit (15), in that the output signal of the adding circuit (15) is fed to the interpolation circuit (16) and in that at the outputs of the interpolation circuit (16) there can be derived the second signal component (C) split up according to colour components (Un, Vn).

7. A circuit according to claim 6, **characterised in that** the interpolation circuit (16) delivers output signals corresponding to the following equations:
   for the line n: $V_n = [V_{(n+1)} + V_{(n-1)}]/2$
   for the line n+1: $U_n = [U_n + U_{(n+2)}]/2.$

## Revendications

1. Procédé d'accomodation temporelle d'une seconde composante (C) à une première composante (Y) d'un signal, ces deux composantes étant stockées dans une mémoire avec des compteurs d'adresses pour lignes et/ou colonnes, pour l'écriture et/ou la lecture du contenu de la mémoire avec utilisation d'une structure en lignes et colonnes, **caractérisé en ce qu'**à l'aide d'un compteur incrémentable et décrémentable supplémentaire, on utilise des valeurs mémorisées d'une première ligne avec une première valeur d'adresse (n) pour la lecture de la première composante (Y) du signal et des valeurs mémorisées d'une seconde ligne avec une seconde valeur d'adresse (n+1) pour la lecture de la seconde composante (C) du signal, la seconde valeur d'adresse étant augmentée par rapport à la première et les valeurs de la seconde composante (C), extraites par lecture de la mémoire, étant conduites à un circuit de traitement de signal, qui traite de manière combinée les valeurs de la seconde composante du signal extraites par lecture de plusieurs lignes.

2. Procédé selon la revendication 1, **caractérisé en ce que** l'adressage pour la lecture de la mémoire s'effectue au moyen de deux compteurs commutables.

3. Procédé selon la revendication 1, **caractérisé en ce que** l'adressage pour la lecture de la mémoire s'effectue au moyen d'un compteur (10), dont le niveau peut être réduit et augmenté.

4. Procédé selon la revendication 2 ou 3, **caractérisé en ce que** le circuit de traitement de signal est un filtre vertical d'interpolation, le retard de ce filtre d'interpolation correspondant à la différence entre la seconde valeur d'adressage (n+1) et la première valeur d'adressage (n).

5. Procédé selon une ou plusieurs des revendications 1 à 4, **caractérisé en ce que** la première composante (Y) du signal est la partie luminance et la seconde composante (C) du signal est la partie chrominance d'un signal TV.

6. Circuit pour la réalisation d'un procédé selon l'une ou plusieurs des revendications 1 à 5, se composant d'une mémoire pour le stockage d'une première composante (Y) et d'une seconde composante (C) d'un signal avec utilisation d'une structure en lignes et colonnes, et d'un compteur d'adresses pour lignes et/ou colonnes pour l'écriture et/ou la lecture du contenu de la mémoire, **caractérisé en ce que** les valeurs mémorisées des composantes du signal peuvent être extraites par lecture au moyen d'un compteur (10) incrémentable et décrémentable supplémentaire, **en ce que** la seconde composante du signal est conduite à un premier circuit de retard (12) et à un circuit addeur (15) au moyen d'un démultiplexeur (11), **en ce que** le signal de sortie du premier circuit de retard (12) est conduit à un circuit d'interpolation (16) et, en passant par un second circuit de retard (14), au circuit addeur (15), **en ce que** le signal de sortie du circuit addeur (15) est amené au circuit d'interpolation (16) et **en ce que** la seconde composante (C) du signal, divisée en composantes couleur ($U_n$, $V_n$), peut être prélevée aux sorties du circuit d'interpolation (16).

7. Circuit selon la revendication6, **caractérisé en ce que** le circuit d'interpolation (16) fournit des signaux de sortie correspondant aux équations suivantes:
   pour la ligne n: $V_n = [V_{(n+1)} + V_{(n-1)}]/2$
   pour la ligne n+1: $U_n = [U_n + U_{(n+2)}]/2$

FIG.1

inc →

dec →

10

→ out

FIG.2a

n

FIG.2b

n+1

x−1    x    x+1    x+2    x+3    x+4

+1          +1

n+1    n    n+1    n    n+1    n        FIG.2c

−1          −1          −1

FIG.4

B →    11    12    13    14    15    16

$U_n$

$V_n$

$Y_n$

n ──┼──y──┼──c──┼──y──┼──y──┼──y──┼──c──┼──y──┼──

# FIG.3a

n+1 ──┼──y──┼──c──┼──y──┼──y──┼──y──┼──c──┼──y──┼──

# FIG.3b

out ──┼──$y_n$──┼────┼──$y_n$──┼──$y_n$──┼──$y_n$──┼────┼──$y_n$──┼──

$c_{n+1}$         $c_{n+1}$

# FIG.3c

RCA ──┼──n──┼──n+1──┼──n──┼──n──┼──n──┼──n+1──┼──n──┼──

+1     −1              +1     −1

# FIG.3d

DDS

# FIG.3e